# EUROPEAN PATENT SPECIFICATION

(11) **EP 4 520 233 B1**
(45) Date of publication and mention of the grant of the patent: **10.09.2025**
(21) Application number: 24191919.0
(22) Date of filing: 30.07.2024
(51) Int. Cl.: A47K 11/02, B65B 9/15

(54) **PLASTIC BAG PACKAGING AND SEPARATING DEVICE FOR SMART PACKAGING TOILET**
KUNSTSTOFFBEUTELVERPACKUNGS- UND TRENNVORRICHTUNG FÜR INTELLIGENTE VERPACKUNGSTOILETTE
DISPOSITIF D'EMBALLAGE ET DE SÉPARATION DE SAC EN PLASTIQUE POUR TOILETTES À EMBALLAGE INTELLIGENT

(30) Priority: 08.09.2023 CN 202311155471
(43) Date of publication of application: 12.03.2025
(73) Proprietor: Jiangsu Sanjo Intelligent Technology Co., Ltd., Nandu Town Liyang City, Jiangsu 213371 (CN); Photon Robot (Ningbo) Co., Ltd., Ningbo Zhejiang 315000 (CN)
(72) Inventor: WANG, Lei, Ningbo 315000 (CN); ZHANG, Jiang, Ningbo 315000 (CN); XIAO, Heping, Liyang City, Changzhou 213371 (CN)
(74) Representative: Miller, Ronald Anthony

(56) References cited:
- CN-U- 216 071 515
- JP-A- 2016 037 307

## Description

### TECHNICAL FIELD

The present disclosure relates to the technical field of smart toilets, and in particular to a plastic bag packaging and separating device for a smart packaging toilet.

### BACKGROUND

At present, most smart toilets on the market are flush toilets. By additional arrangement of a sensor and some small devices, the smart toilet enables users to have a more comfortable and humanized experience in aspects such as temperature and cleaning, but a flushing cleaning method has very great limitations for some specific occasions and people. Since flush toilet needs to be connected to a water supply and drainage system, the flush toilet is slightly insufficient in portability, convenience, and hygiene. In order to improve use convenience and portability of the toilet, a common method on the market is to clean an excreta container or sleeve a plastic bag in the container for packaging, but no matter which method is used, there are problems of complicated process and insanitation. Some toilets solve inconvenience of manual cleaning or bag replacement by automatic packaging. A device implements plastic bag packaging and replacement by movement of a packaging mechanism, which achieves higher convenience and hygiene in cleaning and carrying the toilets, and also enables the toilets to be applied to more scenarios and more people. However, there are also some shortcomings in packaging mechanisms of most smart toilets at present. For example, a packaging and sealing effect is poor, and a plastic bag is separated incompletely after being packaged. This leads to inconvenience in cleaning the plastic bag. In addition, there is a connection between plastic bags, and the plastic bag is likely to be broken to expose dirt when taken out. JP2016037307A discloses a film unit. The film unit comprises a film accommodation guide, a film feeding mechanism, and a seal mechanism for thermally compressing and bonding a film F, and cutting and sealing the film F. The seal mechanism comprises a heater, a crimp part disposed to face the heater, and a motor for moving the crimp part. After the film F is held by the heater and the crimp part, the film feeding mechanism is driven and the film F is fed downward slightly. CN216071515U discloses a plastic bag packaging mechanism for an intelligent packaging pedestal pan. The plastic bag packaging mechanism comprises a mounting base, a guide shaft, a bag pressing rod assembly, a circuit board, a synchronous belt, a first belt wheel, a second belt wheel, a first connecting shaft, a second connecting shaft, a gear, a motor driving assembly, a hot melting sealing cutting device, a spring, a clamping spring and a position sensor.

### SUMMARY

In order to solve the problems of poor packaging effects and incomplete separation of a plastic bag in a packaging mechanism of a smart packaging toilet on the market at present, the present disclosure discloses a plastic bag packaging and separating device for a smart packaging toilet. The technical solutions of the present disclosure are implemented as follows:
A plastic bag packaging and separating device for a smart packaging toilet includes a synchronous belt, a driving shaft, a motor, a guide rod, a gathering mechanism, a roller assembly, a hot-melt base, and a hot-melt device, where the plastic bag packaging and separating device further includes a silicone strip groove, an exhaust sheet, and a lower rotating mechanism, where
the motor is connected to the driving shaft, the synchronous belt is wound around the driving shaft, the gathering mechanism is clamped into the synchronous belt through a clamping member and is slidably arranged on the guide rod, the hot-melt device is mounted on the hot-melt base, the lower rotating mechanism is connected to the hot-melt base, the roller assembly is arranged below the guide rod, the silicone strip groove is provided in the gathering mechanism, and the exhaust sheet is arranged below the silicone strip groove, wherein the exhaust sheet fits with a slot hole below the gathering mechanism through exhaust rotating shaft, a rear structure of the slot hole is provided with a limit structure, and the limit structure is configured to limit rotation of the exhaust sheet beyond 90° relative to the gathering mechanism.

Preferably, the lower rotating mechanism includes a housing, a rotating shaft motor, and a rotating shaft; and the rotating shaft motor is mounted on the housing, and the rotating shaft is connected to the rotating shaft motor. The rotating shaft is disposed to face a silicone strip within the silicone strip groove, wherein after the gathering mechanism gathers the plastic bag towards the hot-melt base, the rotating shaft motor drives the rotating shaft to rotate, so as the plastic bag is pressed between the rotating shaft and the silicone strip such that one side of the plastic bag is pulled down by a friction force of the rotating shaft, and the other side thereof is pulled by a friction force applied by the roller assembly.

Preferably, the lower rotating mechanism further includes a horizontal notch, and the horizontal notch is provided on the housing.

Preferably, a rubber sleeve is sleeved on the rotating shaft.

Preferably, a silicone strip is attached into the silicone strip groove, the gathering mechanism is provided with a mounting hole, and the silicone strip groove is connected to the gathering mechanism through the mounting hole.

According to the present disclosure, the lower rotating mechanism is mounted on the hot-melt base, and the silicone strip is mounted on the gathering mechanism. A plastic bag is driven to rotate by rotation of the rotating shaft by means of friction between the rotating shaft and the silicone strip, so that the plastic bag is tightened, thereby facilitating cutting of the plastic bag.

### BRIEF DESCRIPTION OF THE DRAWINGS

To describe the technical solutions in the embodiments of the present disclosure or in the prior art more clearly, the following briefly describes the accompanying drawings required for describing the embodiments or the prior art. Clearly, the accompanying drawings in the following description merely show an embodiment of the present disclosure, and those of ordinary skill in the art can still derive other drawings from these accompanying drawings without creative efforts.

The same parts are denoted by the same reference signs. It should be noted that the words "front", "rear", "left", "right", "upper", and "lower" used in the following description refer to directions in the accompanying drawings, and the words "bottom surface", "top surface", "inner", and "outer" refer to directions toward or away from a geometric center of a specific part respectively.
FIG. 1 is a schematic structural diagram of a plastic bag packaging and separating device for a smart packaging toilet according to an embodiment;
FIG. 2 is a structural diagram of a lower rotating mechanism according to an embodiment;
FIG. 3 is a schematic structural diagram of a silicone strip groove according to an embodiment; and
FIG. 4 is a diagram showing a usage state of a plastic bag packaging and separating device for a smart packaging toilet according to an embodiment.

Reference signs:
1. Synchronous belt;
2. Driving shaft;
3. Motor;
4. Silicone strip groove;
5. Exhaust sheet;
5-1. Exhaust rotating shaft;
6. Guide rod;
7. Gathering mechanism;
7-1. Mounting hole;
8. Roller assembly;
9. Lower rotating mechanism;
9-1. Housing; 9-2. Rotating shaft motor; 9-3. Rotating shaft; 9-4. Horizontal notch; 9-5. Motor mounting hole; 9-6. Threaded hole;
10. Hot-melt base;
11. Hot-melt device;
12. Silicone strip.

### DETAILED DESCRIPTION OF THE EMBODIMENTS

The technical solutions of the embodiments of the present disclosure are clearly and completely described below with reference to the accompanying drawings in the embodiments of the present disclosure. Apparently, the described embodiments are merely some rather than all of the embodiments of the present disclosure. All other embodiments obtained by those of ordinary skill in the art based on the embodiments of the present disclosure without creative efforts shall fall within the protection scope of the present disclosure.

### Embodiment 1

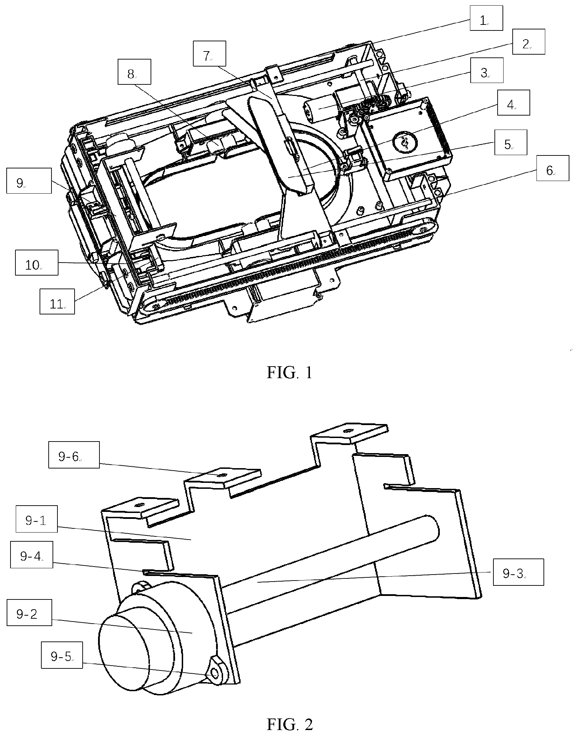

In a specific embodiment, as shown in FIG. 1, a plastic bag packaging and separating device for a smart packaging toilet includes synchronous belt 1, driving shaft 2, motor 3, silicone strip groove 4, exhaust sheet 5, guide rod 6, gathering mechanism 7, roller assembly 8, lower rotating mechanism 9, hot-melt base 10, and hot-melt device 11. The motor 3 is connected to the driving shaft 2, and the synchronous belt 1 is wound around the driving shaft 2. The gathering mechanism 7 is clamped into the synchronous belt 1 through a clamping member and is slidably arranged on the guide rod 6. The hot-melt device 11 is mounted on the hot-melt base 10, and the lower rotating mechanism 9 is connected to the hot-melt base 10, and the roller assembly 8 is arranged below the guide rod 6. The silicone strip groove 4 is provided in the gathering mechanism 7, and the exhaust sheet 5 is arranged below the silicone strip groove 4.

As shown in FIG. 2, the lower rotating mechanism 9 includes housing 9-1, rotating shaft motor 9-2, rotating shaft 9-3, horizontal notches 9-4, motor mounting hole 9-5, and threaded hole 9-6. The rotating shaft motor 9-2 is mounted on the housing 9-1 through the motor mounting hole 9-5. The rotating shaft 9-3 is connected to the rotating shaft motor 9-2, and the horizontal notches 9-4 are provided on the housing 9-1. A rubber sleeve is sleeved on the rotating shaft 9-3, and the threaded hole 9-6 is provided in the housing 9-1.

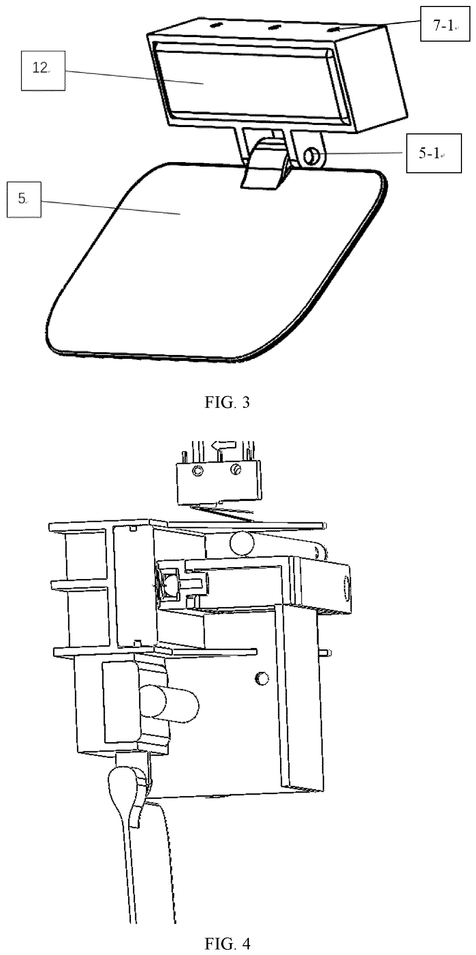

As shown in FIG. 3, silicone strip 12 is attached into the silicone strip groove 4, the gathering mechanism 7 is provided with mounting hole 7-1, and the silicone strip groove 4 is connected to the gathering mechanism 7 through the mounting hole 7-1.

In this embodiment, the motor 3 drives the driving shaft 2 to rotate, and a pulley is arranged on the driving shaft 2, so that the pulley rotates to make the synchronous belt 1 rotate. The gathering mechanism 7 is clamped into the synchronous belt 1 through a clamping member, and the gathering mechanism 7 slides on two parallel guide rods 6 with the rotation of the synchronous belt 1, thereby pushing a plastic bag to be folded for hot melt packaging. The hot-melt base 10 is mounted on a left side of a toilet seat, and the hot-melt device 11 is mounted in the front of the hot-melt base 10. The lower rotating mechanism 9 is mounted on the hot-melt base 10. The rotating shaft 9-3 and the rotating shaft motor 9-2 are mounted on the lower rotating mechanism 9. Two roller assemblies 8 are arranged on two sides of a lower portion of the toilet seat respectively to pull down the plastic bag, and the silicone strip groove 4 and the silicone strip 12 that fit with the lower rotating mechanism 9 are mounted on the gathering mechanism 7. The exhaust sheet 5 is mounted below the silicone strip groove 4. During gathering, the exhaust sheet 5 is in a vertical state, and the air in the plastic bag in a toilet tank cavity is slowly exhausted with the squeezing, so that a space utilization rate in a toilet tank under the smart packaging toilet can be increased. After the gathering mechanism 7 gathers the plastic bag to a left hot melt seal, the rotating shaft motor 9-2 on the lower rotating mechanism 9 drives the rotating shaft 9-3 to rotate. Because the plastic bag is pressed between the rotating shaft 9-3 and the silicone strip 12, one side of the plastic bag is pulled down by a friction force of the rotating shaft 9-3, and the other side thereof is pulled by a friction force between the roller assemblies 8, so that the plastic bag is tightened, thereby facilitating cutting and separation between plastic bags. After the hot melting, the gathering mechanism 7 does not return immediately, but retreats for a distance before returning and then stops. At this time, the rotating shaft 9-3 rotates again, and a used garbage bag continues to rotate downward to ensure that the used garbage bag is completely separated from an unused garbage bag.

The motor 3 of the lower rotating mechanism 9 is fixed to a left side of the housing 9-1 by a fastening bolt through the threaded hole 9-6 in the housing 9-1. In order to avoid interference and conflict between the housing 9-1 and a triangular fin of the gathering mechanism 7, the horizontal notches 9-4 are dug on left and right sides of the housing 9-1, and the housing 9-1 is directly fixed to the hot-melt base 10 through a hole provided above the housing 9-1, which adopts bolted connection. The rotating shaft 9-3 is directly connected to an output shaft of the motor 3, and the connection to the motor 3 is implemented by a flat key in the middle of the shaft. The other end of the rotating shaft 9-3 passes through a circular hole in a right side of the housing 9-1, and then is clamped on the shaft through a clamp spring to be axially positioned. An outer surface of the rotating shaft 9-3 is sleeved with a rubber material to increase a friction force between the rotating shaft 9-3 and the plastic bag.

The silicone strip groove 4 is connected by a bolt through the mounting hole 7-1 in the gathering mechanism 7, and the silicone strip 12 is attached into the silicone strip groove 4 by using an adhesive, and is mainly configured to cooperate with the rotating shaft 9-3 to press the plastic bag, and provide a certain buffer to reduce noise. The exhaust sheet 5 fits with a slot hole below the gathering mechanism 7 through exhaust rotating shaft 5-1. A rear structure of the slot hole is provided with a limit. The exhaust sheet 5 can no longer rotate when rotating to be at 90°C with the gathering mechanism 7 (that is, in a vertical state), with a state shown in FIG. 4. In this way, during pushing of the gathering mechanism 7, the exhaust sheet 5 can exhaust the air in an area which the exhaust sheet passes through.

When a packaging mechanism operates, a cooperation effect is shown in FIG. 4. When a plastic bag is driven by the pulley to move to a hot-melt sealing mechanism, the gathering mechanism 7 is in contact with a microswitch, a heating sheet, and the lower rotating shaft 9-3 at the same time. The plastic bag is pressed onto an upper silicone strip 12 and a lower silicone strip 12 of the gathering mechanism 7 at the same time. At this time, the rotating shaft 9-3 rotates to drive the pressed plastic bag to move downward, and a plastic bag part between the roller assembly 8 and the rotating shaft 9-3 is tightened. Then the heating sheet starts to heat the plastic bag for hot melt to a suitable temperature. After completion, the gathering mechanism 7 retreats by a distance, and at this time, the rotating shaft 9-3 rotates again to pull down the plastic bag that has been hot-melted and cut to ensure the separation between plastic bags. Then the gathering mechanism 7 retreats to an original position to complete an operation.

## Claims

1. A plastic bag packaging and separating device for a smart packaging toilet, comprising a driving shaft (2), a motor (3), a guide rod (6), a gathering mechanism (7), a roller assembly (8), a hot-melt base (10), and a hot-melt device (11), a silicone strip groove (4), an exhaust sheet (5), and a lower rotating mechanism (9), wherein
the motor (3) is connected to the driving shaft (2), the gathering mechanism (7) is slidably arranged on the guide rod (6), the hot-melt device (11) is mounted on the hot-melt base (10), the lower rotating mechanism (9) is connected to the hot-melt base (10),
**characterized in that**
the plastic bag packaging and separating device further comprises a synchronous belt (1), the synchronous belt (1) is wound around the driving shaft (2), and the gathering mechanism (7) is clamped into the synchronous belt (1) through a clamping member;
the roller assembly (8) is arranged below the guide rod (6), the silicone strip groove (4) is provided in the gathering mechanism (7), and the exhaust sheet (5) is arranged below the silicone strip groove (4), wherein the exhaust sheet (5) fits with a slot hole below the gathering mechanism (7) through exhaust rotating shaft (5-1), a rear structure of the slot hole is provided with a limit structure, and the limit structure is configured to limit rotation of the exhaust sheet (5) beyond 90° relative to the gathering mechanism (7).

2. The plastic bag packaging and separating device for the smart packaging toilet according to claim 1, **characterized in that** the lower rotating mechanism (9) comprises a housing (9-1), a rotating shaft motor (9-2), and a rotating shaft (9-3); and the rotating shaft motor (9-2) is mounted on the housing (9-1), and the rotating shaft (9-3) is connected to the rotating shaft motor (9-2),
the rotating shaft (9-3) is disposed to face a silicone strip (12) within the silicone strip groove (4),
wherein after the gathering mechanism (7) gathers the plastic bag towards the hot-melt base (10), the rotating shaft motor (9-2) drives the rotating shaft (9-3) to rotate, so as the plastic bag is pressed between the rotating shaft (9-3) and the silicone strip (12) such that one side of the plastic bag is pulled down by a friction force of the rotating shaft (9-3), and the other side thereof is pulled by a friction force applied by the roller assembly (8).

3. The plastic bag packaging and separating device for the smart packaging toilet according to claim 2, **characterized in that** the lower rotating mechanism (9) further comprises a horizontal notch (9-4), and the horizontal notch (9-4) is provided on the housing (9-1).

4. The plastic bag packaging and separating device for the smart packaging toilet according to claim 2, **characterized in that** a rubber sleeve is sleeved on the rotating shaft (9-3).

5. The plastic bag packaging and separating device for the smart packaging toilet according to claim 1, **characterized in that** a silicone strip (12) is attached into the silicone strip groove (4), the gathering mechanism (7) is provided with a mounting hole (7-1), and the silicone strip groove (4) is connected to the gathering mechanism (7) through the mounting hole (7-1).

## Patentansprüche

1. Vorrichtung zum Verpacken und Trennen von Plastikbeuteln für eine intelligente Toilette mit Verpackungsfunktion, umfassend eine Antriebswelle (2), einen Motor (3), eine Führungsstange (6), einen Sammelmechanismus (7), eine Rollenanordnung (8), eine Schmelzkleberbasis (10) und eine Schmelzklebevorrichtung (11), eine Silikonstreifen-Nut (4), eine Abluftplatte (5) und einen unteren Drehmechanismus (9), wobei
der Motor (3) mit der Antriebswelle (2) verbunden ist, der Sammelmechanismus (7) verschiebbar auf der Führungsstange (6) angeordnet ist, die Schmelzklebevorrichtung (11) auf der Schmelzkleberbasis (10) montiert ist und der untere Drehmechanismus (9) mit der Schmelzkleberbasis (10) verbunden ist, **dadurch gekennzeichnet, dass**
die Vorrichtung zum Verpacken und Trennen von Plastikbeuteln ferner einen Synchronriemen (1) umfasst, wobei der Synchronriemen (1) um die Antriebswelle (2) gewickelt ist und der Sammelmechanismus (7) durch ein Klemmelement in den Synchronriemen (1) eingespannt ist, wobei die Rollenanordnung (8) unterhalb der Führungsstange (6) angeordnet ist, die Silikonstreifen-Nut (4) im Sammelmechanismus (7) vorgesehen ist und die Abluftplatte (5) unterhalb der Silikonstreifen-Nut (4) angeordnet ist, wobei die Abluftplatte (5) mit einem Langloch unter dem Sammelmechanismus (7) durch Abluftdrehwelle (5-1) zusammenpasst, eine hintere Struktur des Langlochs mit einer Begrenzungsstruktur versehen ist, und wobei die Begrenzungsstruktur so konfiguriert ist, dass sie die Drehung der Abluftplatte (5) über 90° hinaus relativ zum Sammelmechanismus (7) begrenzt.

2. Vorrichtung zum Verpacken und Trennen von Plastikbeuteln für die intelligente Toilette mit Verpackungsfunktion nach Anspruch 1, **dadurch gekennzeichnet, dass** der untere Drehmechanismus (9) ein Gehäuse (9-1), einen Drehwellenmotor (9-2) und eine Drehwelle (9-3) umfasst, wobei der Drehwellenmotor (9-2) an dem Gehäuse (9-1) montiert ist und die Drehwelle (9-3) mit dem Drehwellenmotor (9-2) verbunden ist, wobei
die Drehwelle (9-3) so angeordnet ist, dass sie einem Silikonstreifen (12) in der Silikonstreifen-Nut (4) gegenüberliegt,
wobei nach dem Sammeln des Plastikbeutels durch den Sammelmechanismus (7) in Richtung der Schmelzkleberbasis (10) der Drehwellenmotor (9-2) die Drehwelle (9-3) zum Drehen antreibt, sodass der Plastikbeutel zwischen die Drehwelle (9-3) und den Silikonstreifen (12) gepresst wird, wodurch eine Seite des Plastikbeutels durch eine Reibungskraft der Drehwelle (9-3) nach unten abgezogen wird, während die andere Seite durch eine Reibungskraft, die von der Rollenanordnung (8) ausgeübt wird, gezogen wird.

3. Vorrichtung zum Verpacken und Trennen von Plastikbeuteln für eine intelligente Toilette mit Verpackungsfunktion nach Anspruch 2, **dadurch gekennzeichnet, dass** der untere Drehmechanismus (9) ferner eine horizontale Aussparung (9-4) umfasst, wobei die horizontale Aussparung (9-4) am Gehäuse (9-1) vorgesehen ist.

4. Vorrichtung zum Verpacken und Trennen von Plastikbeuteln für eine intelligente Toilette mit Verpackungsfunktion nach Anspruch 2, **dadurch gekennzeichnet, dass** eine Gummimanschette auf die Drehwelle (9-3) aufgesetzt wird.

5. Vorrichtung zum Verpacken und Trennen von Plastikbeuteln für die intelligente Toilette mit Verpackungsfunktion nach Anspruch 1, **dadurch gekennzeichnet, dass** ein Silikonstreifen (12) in der Silikonstreifen-Nut (4) befestigt ist, der Sammelmechanismus (7) mit einem Montageloch (7-1) versehen ist und die Silikonstreifen-Nut (4) durch das Montageloch (7-1) mit dem Sammelmechanismus (7) verbunden ist.

## Revendications

1. Dispositif d'emballage et de séparation de sacs en plastique pour une toilette à emballage intelligent, comprenant un arbre d'entraînement (2), un moteur (3), une tige de guidage (6), un mécanisme de collecte (7), un ensemble de rouleaux (8), une base de thermofusion (10) et un dispositif de thermofusion (11), une rainure de bande en silicone (4), une feuille d'échappement (5) et un mécanisme rotatif inférieur (9), dans lequel,
le moteur (3) est relié à l'arbre d'entraînement (2), le mécanisme de collecte (7) est disposé de manière coulissante sur la tige de guidage (6), le dispositif de thermofusion (11) est monté sur la base de thermofusion (10), et le mécanisme rotatif inférieur (9) est relié à la base de thermofusion (10),
**caractérisé en ce que**,
le dispositif d'emballage et de séparation de sacs en plastique comprend en outre une courroie synchrone (1), la courroie synchrone (1) est enroulée autour de l'arbre d'entraînement (2) et le mécanisme de collecte (7) est serré dans la courroie synchrone (1) par l'intermédiaire d'un élément de serrage ;
l'ensemble de rouleaux (8) est disposé sous la tige de guidage (6), la rainure de bande en silicone (4) est prévue dans le mécanisme de collecte (7), et la feuille d'échappement (5) est disposée sous la rainure de bande en silicone (4), dans lequel la feuille d'échappement (5) s'adapte à un trou de fente sous le mécanisme de collecte (7) par l'intermédiaire d'un arbre rotatif d'échappement (5-1), une structure arrière du trou de fente est pourvue d'une structure de limitation, et la structure de limitation est configurée pour limiter une rotation de la feuille d'échappement (5) au-delà de 90° par rapport au mécanisme de collecte (7).

2. Dispositif d' emballage et de séparation de sacs en plastique pour la toilette à emballage intelligent selon la revendication 1, **caractérisé en ce que** le mécanisme rotatif inférieur (9) comprend un boîtier (9-1), un moteur d'arbre rotatif (9-2) et un arbre rotatif (9-3) ; et le moteur d'arbre rotatif (9-2) est monté sur le boîtier (9-1), et l'arbre rotatif (9-3) est relié au moteur d'arbre rotatif (9-2),
l'arbre rotatif (9-3) est disposé en regard d'une bande en silicone (12) à l'intérieur de la rainure de bande en silicone (4),
dans lequel une fois que le mécanisme de collecte (7) collecte le sac en plastique vers la base de thermofusion (10), le moteur d'arbre rotatif (9-2) entraîne l'arbre rotatif (9-3) à tourner, de sorte que le sac en plastique soit pressé entre l'arbre rotatif (9-3) et la bande en silicone (12), ainsi, un côté du sac en plastique est tiré vers le bas sous action d'une force de frottement de l'arbre rotatif (9-3), et l'autre côté de celui-ci est tiré sous action d'une force de frottement appliquée par l'ensemble de rouleaux (8).

3. Dispositif d' emballage et de séparation de sacs en plastique pour la toilette à emballage intelligent selon la revendication 2, **caractérisé en ce que** le mécanisme rotatif inférieur (9) comprend en outre une encoche horizontale (9-4), et l'encoche horizontale (9-4) est prévue sur le boîtier (9-1).

4. Dispositif d' emballage et de séparation de sacs en plastique pour la toilette à emballage intelligent selon la revendication 2, **caractérisé en ce qu'**un manchon en caoutchouc est manchonné sur l'arbre rotatif (9-3).

5. Dispositif d' emballage et de séparation de sacs en plastique pour la toilette à emballage intelligent selon la revendication 1, **caractérisé en ce qu'**une bande en silicone (12) est fixée dans la rainure de bande en silicone (4), le mécanisme de collecte (7) est pourvu d'un trou de montage (7-1) et la rainure de bande en silicone (4) est reliée au mécanisme de collecte (7) par l'intermédiaire du trou de montage (7-1).
